# EUROPÄISCHE PATENTANMELDUNG

(11) **EP 4 596 587 A1**
(43) Veröffentlichungstag der Anmeldung: **06.08.2025**
(21) Anmeldenummer: 25150839.6
(22) Anmeldetag: 09.01.2025
(51) Int. Cl.: C08B 30/12, C08B 30/14, C08B 30/16, C08L 3/02

(54) **VORRICHTUNG UND VERFAHREN ZUR KONTINUIERLICHEN THERMISCHEN BEHANDLUNG EINES WÄSSRIGEN STÄRKEZUSTANDS**

(30) Priorität: 01.02.2024 DE 102024102909
(71) Anmelder: BVG Bauer Verfahrenstechnik GmbH, 89626 Greifenberg (DE)
(72) Erfinder: HÖRAUF, Christian, 82211 Herrsching, (DE); BAUER, Joachim, 86926 Greifenberg (DE)
(74) Vertreter: Wittmann, Ernst-Ulrich

(57) **Zusammenfassung**

Eine Vorrichtung zur kontinuierlichen thermischen Behandlung eines wässriges Stärkezustands wird bereitgestellt, die Folgendes aufweist: eine Heizstrecke, um den Stärkezustand zu erhitzen und unter Druck zu setzen, eine Entspannungsstrecke, um den erhitzten und unter Druck stehenden Stärkezustand auf einen Referenzdruck zu entspannen, wobei die Entspannungsstrecke eine Abscheidungseinrichtung aufweist, um eine bei der Entspannung des Stärkezustands entstehende gasförmige Phase von dem Stärkezustand abzutrennen, und eine Rückführeinspeisungseinrichtung, um die in der Abscheidungseinrichtung abgetrennte gasförmige Phase in die Heizstrecke einzuspeisen.

## Beschreibung

### Technisches Gebiet

Die vorliegende Erfindung betrifft eine Vorrichtung und ein Verfahren zur kontinuierlichen thermischen Behandlung eines wässrigen Stärkezustands.

### Stand der Technik

Wässrige Stärkezustände wie Stärkemischungen, Stärkesuspensionen und Stärkekleister werden bei verschiedenen industriellen Prozessen, wie beispielsweise der Papierherstellung, erstellt und verwendet. Zur Erstellung und Aufbereitung solcher Stärkezustände sind Vorrichtungen und Verfahren zur kontinuierlichen thermischen Behandlung von wässrigen Stärkezuständen bekannt. Gemäß den bekannten Vorrichtungen und Verfahren erfolgt ein Stärkeabbau mit Enzymen unter definierten Prozessbedingungen. Um den Abbauprozess nach Erreichen vorgegebener Zieleigenschaften des Stärkezustands zu beenden, erfolgt eine thermische Inaktivierung der Enzyme bei einer Temperatur von 100 bis 140 °C. Dabei wird der Stärkezustand auch unter Druck gesetzt. Nach der Inaktivierung wird der Stärkezustand auf Atmosphärendruck entspannt, wobei eine gasförmige Phase, sogenannter Brüdendampf (auch geflashter Dampf), entsteht. Dieser Brüdendampf wird von dem Stärkezustand abgetrennt und an die Atmosphäre abgegeben, da eine Verdünnung des thermisch behandelten Stärkezustands durch den kondensierten Brüdendampf technisch nicht gewünscht ist.

Die stetig weitergehenden Forderungen nach mehr Nachhaltigkeit, insbesondere in den energieintensiven Industriezweigen, und die damit verbundene notwendige Reduzierung von COz-Emissionen erfordern eine möglichst optimale Nutzung von eingesetzter Energie. Durch die Abgabe des Brüdendampfes an die Atmosphäre wird bei den bekannten Vorrichtungen und Verfahren der Energieinhalt des Brüdendampfes nicht genutzt, was einen beträchtlichen Verlust an Energie für den Prozess darstellt.

### Von der Erfindung zu lösende technische Aufgabe

Es ist die Aufgabe der vorliegenden Erfindung, einen oder mehrere der Nachteile des Standes der Technik zu beseitigen. Insbesondere ist es die Aufgabe der vorliegenden Erfindung eine Vorrichtung und ein Verfahren zur kontinuierlichen thermischen Behandlung eines wässrigen Stärkezustands bereitzustellen, die eine verbesserte Nutzung von Energie bieten.

### Offenbarung der Erfindung

Die Aufgabe wird erfindungsgemäß durch eine Vorrichtung mit den Merkmalen des unabhängigen Anspruchs 1 und durch ein Verfahren mit den Merkmalen des unabhängigen Anspruchs 10 gelöst. Weitere vorteilhafte Ausgestaltungen sind in den abhängigen Ansprüchen definiert.

Die erfindungsgemäße Vorrichtung zur kontinuierlichen thermischen Behandlung eines wässriges Stärkezustands hat eine Heizstrecke, um den Stärkezustand zu erhitzen und unter Druck zu setzen. Des Weiteren hat die Vorrichtung eine Entspannungsstrecke, um den erhitzten und unter Druck stehenden Stärkezustand auf einen Referenzdruck zu entspannen. Die Entspannungsstrecke weist eine Abscheidungseinrichtung auf, um eine bei der Entspannung des Stärkezustands entstehende gasförmige Phase, insbesondere Brüdendampf, von dem Stärkezustand abzutrennen. Des Weiteren hat die Vorrichtung eine Rückführeinspeisungseinrichtung, um die in der Abscheidungseinrichtung abgetrennte gasförmige Phase in die Heizstrecke einzuspeisen.

Die Rückführeinspeisungseinrichtung kann die bei der Entspannung des Stärkezustands entstehende und durch die Abscheidungseinrichtung abgetrennte gasförmige Phase in die Heizstrecke einspeisen. Dadurch wird eine Abgabe der gasförmigen Phase an die Atmosphäre verhindert und der Energieinhalt der gasförmigen Phase kann zum Heizen des Stärkezustands in der Heizstrecke beitragen. Bei der Einspeisung in die Heizstrecke kondensiert die gasförmige Phase unmittelbar (Phasenwechsel) und gibt die in der gasförmigen Phase enthaltene Enthalpie an den zu erhitzenden Stärkezustand frei. Durch die Rückführung der gasförmigen Phase von der Abscheidungseinrichtung in die Heizstrecke kann die eingesetzte Energie optimal genutzt werden. Folglich reduziert sich die von der Vorrichtung zum Heizen des Stärkezustand benötigte Menge an Energie, wodurch der Gesamtenergiebedarf der Vorrichtung gesenkt werden kann. Zudem entfällt die oft unerwünschte sichtbare Abgabe von Dampf an die Atmosphäre, wodurch eine bessere Akzeptanz von Anlagen mit solch einer Vorrichtung in der Bevölkerung erreicht werden kann.

Die Heizstrecke kann eine Dampfeinspeisungseinrichtung aufweisen, die Dampf, insbesondere Sattdampf oder überhitzten Dampf, in die Heizstrecke einspeist, um den Stärkezustand zu erhitzen und unter Druck zu setzen.

Der zum Heizen und Unter-Druck-Setzen des Stärkezustands verwendete Dampf kann über die Abscheidungseinrichtung und die Rückführeinspeisungseinrichtung erneut zum Heizen verwendet werden. Somit kann der als Energiequelle eingesetzte Dampf zum Teil "recycelt" und der Gesamtenergiebedarf der Vorrichtung gesenkt werden.

Die Heizstrecke kann eine erste Heizstrecke, eine bezüglich der ersten Heizstrecke stromabwärts angeordnete zweite Heizstrecke und einen zwischen der ersten und zweiten Heizstrecke angeordneten Abbaukonverter aufweisen. Die erste Heizstrecke kann eine erste Dampfeinspeisungseinrichtung umfassen und kann den Stärkezustand auf eine erste Temperatur erhitzen. Die zweite Heizstrecke kann eine zweite Dampfeinspeisungseinrichtung umfassen und kann den Stärkezustand auf eine zweite Temperatur, die höher als die erste Temperatur ist, erhitzen und auf einen Druck bringen, der höher als der Referenzdruck ist. Die Rückführeinspeisungseinrichtung kann die in der Abscheidungseinrichtung abgetrennte gasförmige Phase in die erste Heizstrecke und/oder die zweite Heizstrecke und/oder den Abbaukonverter einspeisen.

Je nach Anforderung und Bedarf ist es möglich, die gasförmige Phase unter Verwendung der Rückführeinspeisungseinrichtung an verschiedenen Stellen im Prozessablauf einzuspeisen.

Die Heizstrecke kann eine erste Heizstrecke und einen bezüglich der ersten Heizstrecke stromabwärts angeordneten Jetkocher aufweisen. Die erste Heizstrecke kann die Dampfeinspeisungseinrichtung umfassen, um den Stärkezustand auf eine Temperatur zu erhitzen und auf einen Druck zu bringen, der höher als der Referenzdruck ist. Die Rückführeinspeisungseinrichtung kann die in der Abscheidungseinrichtung abgetrennte gasförmige Phase in die erste Heizstrecke einspeisen.

Auch bei der Verwendung eines Jetkochers ist durch das Vorsehen der Rückführeinspeisungseinrichtung eine Energieeinsparung möglich.

Die Rückführeinspeisungseinrichtung kann ein Venturirohr aufweisen.

Die Ausführung der Rückführeinspeisungseinrichtung als Venturirohr bietet eine konstruktiv einfache Lösung, die eine zuverlässige Einspeisung der gasförmigen Phase gewährleistet, da die Einspeisung durch einen im strömenden Stärkezustand hervorgerufenen Unterdruck erfolgt.

Die Rückführeinspeisungseinrichtung kann eine Dampfstrahlpumpe aufweisen, die mit Dampf, insbesondere Sattdampf oder überhitzten Dampf, gespeist wird.

Die Ausführung der Rückführeinspeisungseinrichtung als Dampfstrahlpumpe gewährleistet eine zuverlässige Einspeisung der gasförmigen Phase, da ein "Einsaugen" der rückgeführten gasförmigen Phase durch den zugeführten (Frisch-)Dampf erfolgt.

Die Rückführeinspeisungseinrichtung kann die in der Abscheidungseinrichtung abgetrennte gasförmige Phase in die erste und/oder zweite Heizstrecke über die Dampfeinspeisungseinrichtung einspeisen.

Dadurch kann der der Heizstrecke zugeführte (Frisch-)Dampf die gasförmige Phase "mitreißen", wodurch eine zuverlässige Einspeisung der gasförmigen Phase gewährleistet werden kann.

Die Abscheidungseinrichtung kann einen Fliehkraftabscheider, insbesondere einen Zyklon, aufweisen.

Durch die Ausführung der Abscheidungseinrichtung als Fliehkraftabscheider oder Zyklon erfolgt eine "aktive" Abtrennung der gasförmigen Phase.

Das erfindungsgemäße Verfahren zur kontinuierlichen thermischen Behandlung eines wässriges Stärkezustands umfasst die folgenden Schritte:
Heizen und Druckbeaufschlagung des Stärkezustands in einer Heizstrecke,
Entspannung des Stärkezustands auf einen Referenzdruck in einer Entspannungsstrecke,
Abtrennung einer bei der Entspannung des Stärkezustands entstehenden gasförmigen Phase, insbesondere Brüdendampf, durch eine Abscheidungseinrichtung, und
Rückführung der abgetrennten gasförmigen Phase zum Heizen des Stärkezustands durch eine Rückführeinspeisungseinrichtung.

Das Verfahren kann des Weiteren den Schritt Einspeisen von Dampf, insbesondere Sattdampf oder überhitzten Dampf in die Heizstrecke zum Heizen und zur Druckbeaufschlagung des Stärkezustands durch eine Dampfeinspeisungseinrichtung umfassen.

Das Heizen kann ein erstes Heizen des Stärkezustands auf eine erste Temperatur in der ersten Heizstrecke, und ein zweites Heizen des Stärkezustands auf eine zweite Temperatur, die höher als die erste Temperatur ist, in der zweiten Heizstrecke umfassen. Das Druckbeaufschlagen kann den Stärkezustand in der zweiten Heizstrecke auf einen Druck bringen, der höher als der Referenzdruck ist. Die Rückführung der abgetrennten gasförmigen Phase durch die Rückführeinspeisungseinrichtung kann in die erste Heizstrecke und/oder die zweite Heizstrecke und/oder den Abbaukonverter erfolgen.

Das Heizen kann den Stärkezustand in der ersten Heizstrecke auf eine Temperatur bringen. Das Druckbeaufschlagen kann den Stärkezustand in der ersten Heizstrecke auf einen Druck bringen, der höher als der Referenzdruck ist. Die Rückführung der abgetrennten gasförmigen Phase durch die Rückführeinspeisungseinrichtung kann in die erste Heizstrecke erfolgen.

Die Rückführung kann durch die Rückführeinspeisungseinrichtung erfolgen, die ein Venturirohr oder eine mit Dampf, insbesondere Sattdampf oder überhitzten Dampf, gespeiste Dampfstrahlpumpe aufweisen kann.

Die Abtrennung kann durch die Abscheidungseinrichtung erfolgen, die einen Fliehkraftabscheider, insbesondere einen Zyklon, aufweisen kann.

Die kontinuierliche thermische Behandlung des wässrigen Stärkezustands kann in der erfindungsgemäßen Vorrichtung erfolgen.

Weitere Vorteile der vorliegenden Erfindung sind aus der nachfolgenden ausführlichen Beschreibung einer Ausführungsform und den angefügten Zeichnungen ersichtlich.

### Kurze Beschreibung der Zeichnungen

Figur 1 ist ein schematisches Funktionsschaubild einer Vorrichtung zur kontinuierlichen thermischen Behandlung eines wässrigen Stärkezustands gemäß einer ersten Ausführungsform der vorliegenden Erfindung.
Figur 2 ist ein schematisches Funktionsschaubild einer Vorrichtung gemäß einer zweiten Ausführungsform der vorliegenden Erfindung.
Figur 3 ist ein schematisches Funktionsschaubild einer Vorrichtung gemäß einer dritten Ausführungsform der vorliegenden Erfindung.
Figur 4 ist ein schematisches Funktionsschaubild einer Vorrichtung gemäß einer vierten Ausführungsform der vorliegenden Erfindung.
Figur 5 ist ein schematisches Funktionsschaubild einer Vorrichtung gemäß einer fünften Ausführungsform der vorliegenden Erfindung.
Figur 6 ist ein schematisches Funktionsschaubild einer Vorrichtung gemäß einer sechsten Ausführungsform der vorliegenden Erfindung.
Figur 7 ist ein schematisches Funktionsschaubild einer Vorrichtung gemäß einer siebten Ausführungsform der vorliegenden Erfindung.

### Beschreibung von mindestens einer beispielhaften Ausführungsform der Erfindung

### Erste Ausführungsform

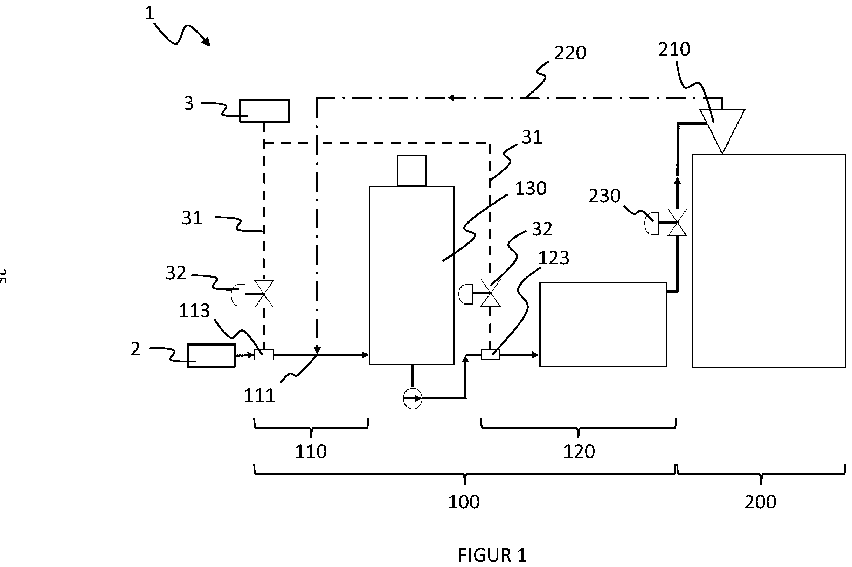

Nachfolgend wird unter Bezugnahme auf Figur 1 eine erste beispielhafte Ausführungsform der vorliegenden Erfindung beschrieben.

Figur 1 zeigt ein schematisches Funktionsschaubild einer Vorrichtung zur kontinuierlichen thermischen Behandlung eines wässrigen Stärkezustands.

Die Vorrichtung 1 weist eine Heizstrecke 100 und eine Entspannungsstrecke 200 auf. Die Heizstrecke 100 und die Entspannungsstrecke 200 können durch verschiedene Rohrleitungen und Behälter ausgebildet sein, die miteinander fluidverbunden sind. Die Volumina dieser Rohrleitungen und Behälter können an die jeweilige erforderliche Durchsatzmenge der Vorrichtung entsprechend angepasst werden.

Der thermisch zu behandelnde wässrige Stärkezustand wird der Heizstrecke 100 von einer Zuführeinrichtung 2 zugeführt und durchströmt die Vorrichtung 1 in einer Richtung von der Heizstrecke 100 zu der Entspannungsstrecke 200. Das heißt, die Entspannungsstrecke 200 ist in einer Strömungsrichtung, in der der wässrige Stärkezustand die Vorrichtung 100 durchströmt, stromabwärts bezüglich der Heizstrecke 100 angeordnet. Von der Entspannungsstrecke 200 kann der thermisch behandelte Stärkezustand, beispielsweise durch eine Dosiermaschine (in den Figuren nicht gezeigt), zur weiteren Verwendung entnommen werden.

Die Heizstrecke 100 umfasst eine erste Heizstrecke 110, eine bezüglich der ersten Heizstrecke 110 stromabwärts angeordnete zweite Heizstrecke 120 und einen zwischen der ersten und zweiten Heizstrecke 110, 120 angeordneten Abbaukonverter 130.

Die Heizstrecke 100 ist eingerichtet, um den Stärkezustand, der der Heizstrecke 100 von der Zuführeinrichtung 2 zugeführt wird, zu erhitzen und unter Druck zu setzen. Dazu umfasst die Heizstrecke 100 mehrere Dampfeinspeisungseinrichtungen 113, 123. In der vorliegenden Ausführungsform umfasst die erste Heizstrecke 110 eine erste Dampfeinspeisungseinrichtung 113 (in den Figuren durch gestrichelte Linien dargestellt) und umfasst die zweite Heizstrecke 120 eine zweite Dampfeinspeisungseinrichtung 123.

Die Dampfeinspeisungseinrichtungen 113, 123 sind eingerichtet, Dampf in die Heizstrecke 100 einzuspeisen, um den Stärkezustand zu erhitzen und unter Druck zu setzen. Die Dampfeinspeisungseinrichtungen 113, 123 werden von einer Dampfversorgungsquelle 3 über Dampfversorgungsleitungen 31 mit Dampf, wie zum Beispiel Sattdampf oder überhitzten Dampf, versorgt.

In der vorliegenden Ausführungsform umfasst die erste und zweite Dampfeinspeisungseinrichtung 113, 123 jeweils ein Regelventil 32, mit dem die Zufuhrmenge von Dampf in die jeweilige Heizstrecke 110, 120 geregelt werden kann.

Eine Regelung der Regelventile 32 für die Zufuhrmenge an Dampf kann anhand von Temperatursensoren erfolgen, die beispielsweise im Abbaukonverter 130 und in der zweiten Heizstrecke 120 angebracht sind, um die erste Temperatur T1 in der ersten Heizstrecke 110 und dem Abbaukonverter 130 sowie die zweite Temperatur T2 in der zweiten Heizstrecke 120 einzustellen.

In der vorliegenden Ausführungsform wird durch die Dampfzufuhr über die erste Dampfeinspeisungseinrichtung 113 der Stärkezustand in der ersten Heizstrecke 110 auf eine erste Temperatur T1 erhitzt. Die erste Temperatur T1 beträgt beispielsweise 85 °C. Durch das Erhitzen des Stärkezustands auf die erste Temperatur T1 wird der Ablauf eines enzymatischen Stärkeabbaus innerhalb des Stärkezustands positiv beeinflusst. Insbesondere wird durch die geeignete Wahl der Temperatur T1 eine optimale Aktivität der Enzyme erreicht.

Der auf die Temperatur T1 aufgeheizte Stärkezustand gelangt von der ersten Heizstrecke 110 in den Abbaukonverter 130. Von dort wird der Stärkezustand mittels einer Pumpe in die zweite Heizstrecke 120 gefördert.

Durch den Abbaukonverter 130 kann eine gewünschte Verweildauer des Stärkezustands auf der Temperatur T1 gewährleistet und somit ein gewünschter Abbaugrad der Stärke erreicht werden.

In der ersten Heizstrecke 110 und in dem Abbaukonverter 130 steht der Stärkezustand unter einem Referenzdruck P0, der in der vorliegenden Ausführungsform etwa dem Atmosphärendruck bzw. Umgebungsdruck entspricht. Das heißt, der Stärkezustand ist in der ersten Heizstrecke 110 und in dem Abbaukonverter 130 nahezu drucklos.

Durch die Dampfzufuhr über die zweite Dampfeinspeisungseinrichtung 123 wird der Stärkezustand in der zweiten Heizstrecke 120 auf eine zweite Temperatur T2 erhitzt. Die zweite Temperatur T2 ist höher als die erste Temperatur T1. Die zweite Temperatur T2 beträgt beispielsweise 110 bis 140 °C, insbesondere 130 °C. Um diese Temperatur T2 zu erreichen, wird der Stärkezustand durch den über die zweite Dampfeinspeisungseinrichtung eingespeisten Dampf auf einen Druck P1 gebracht, der höher als der Referenzdruck P0 ist. Der Druck P1 beträgt beispielsweise 1 bis 6 bar, vorzugsweise 1 bis 3 bar oder insbesondere 1,5 bar Überdruck.

Durch das Erhitzen des Stärkezustands auf die zweite Temperatur T2 wird der enzymatische Stärkeabbau innerhalb des Stärkezustands gestoppt. Dies geschieht insbesondere durch Denaturierung der Enzyme.

Die notwendige Verweildauer des auf die zweite Temperatur T2 erhitzen und auf den Druck P1 gebrachten Stärkezustands wird durch einen entsprechend angepassten Behälter oder durch die Länge der Rohrleitung der zweiten Heizstrecke 120 eingerichtet.

Weiter stromabwärts folgt auf die zweite Heizstrecke 120 die Entspannungsstrecke 200, die eingerichtet ist, den erhitzten und unter Druck stehenden Stärkezustand auf den Referenzdruck P0 zu entspannen. Die Entspannung erfolgt über ein geeignetes Expansionsventil 230, das zwischen der zweiten Heizstrecke 120 und der Entspannungsstrecke 200 angeordnet ist.

Das Expansionsventil 230 kann ein regelbares Expansionsventil mit veränderlichem Durchlassquerschnitt oder eine Blende sein, sodass der Druck P1, unter dem der Stärkezustand in der zweiten Heizstrecke 120 steht, durch Regelung des Expansionsventils 230 auf einen gewünschten Druck eingestellt werden kann.

Die Entspannungsstrecke 200 weist eine Abscheidungseinrichtung 210 auf, die eingerichtet ist, eine bei der Entspannung des Stärkezustands entstehende gasförmige Phase, insbesondere Brüdendampf, von dem Stärkezustand abzutrennen. Die Abscheidungseinrichtung 210 ist stromabwärts bezüglich des Expansionsventils 230 angeordnet. In der vorliegenden Ausführungsform ist die Abscheidungseinrichtung 210 als ein Fliehkraftabscheider, wie beispielsweise ein Zyklon, ausgeführt.

Durch die Entspannung des wässrigen Stärkezustands von dem Druck P1 auf den Referenzdruck P0 bzw. Atmosphärendruck entsteht eine gasförmige Phase, sogenannter Brüdendampf, der im Wesentlichen mit Wasserdampf gesättigte Luft ist. Diese gasförmige Phase wird in der Abscheidungseinrichtung 210 von dem Stärkezustand abgetrennt.

Der Stärkezustand wird von der Abscheidungseinrichtung 210 beispielsweise in einen Sammelbehälter oder direkt an einen Verbraucher, der den thermisch behandelten Stärkezustand verwendet, geleitet.

Die in der Abscheidungseinrichtung 210 abgetrennte gasförmige Phase wird von der Abscheidungseinrichtung 210 über eine Rückführungsleitung 220 (in den Figuren durch eine Strichpunktlinie dargestellt) an eine Rückführeinspeisungseinrichtung 111 geleitet, die eingerichtet ist, um die abgetrennte gasförmige Phase in die Heizstrecke 100 einzuspeisen.

In der vorliegenden Ausführungsform erfolgt die Einspeisung der abgetrennten gasförmigen Phase in die erste Heizstrecke 110. Die Rückführeinspeisungseinrichtung 111 ist beispielsweise als Venturirohr ausgeführt. Das heißt, eine nach dem Prinzip der Venturi-Düse erzeugte Druckdifferenz in der Strömung des wässrigen Stärkezustands saugt die abgetrennte gasförmige Phase in die erste Heizstrecke 110.

Die Einspeisung der abgetrennten gasförmigen Phase kann jedoch auch direkt erfolgen. Eine direkte Einspeisung kann beispielsweise durch eine Rückführeinspeisungseinrichtung 111, die als einfaches T-Stück in der Rohrleitung der ersten Heizstrecke 110 ausgebildet ist, umgesetzt werden.

Bei der Einspeisung der abgetrennten gasförmigen Phase durch die Rückführeinspeisungseinrichtung 111 in die erste Heizstrecke 110 kondensiert die gasförmige Phase unmittelbar (Phasenwechsel) und gibt die in der gasförmigen Phase enthaltene Enthalpie an den zu erhitzenden Stärkezustand frei. Dadurch kann die Dampfzufuhr über die erste Dampfeinspeisungseinrichtung 113, um den Stärkezustand in der ersten Heizstrecke 110 auf die erste Temperatur T1 zu erhitzen, entsprechend reduziert werden.

### Zweite Ausführungsform

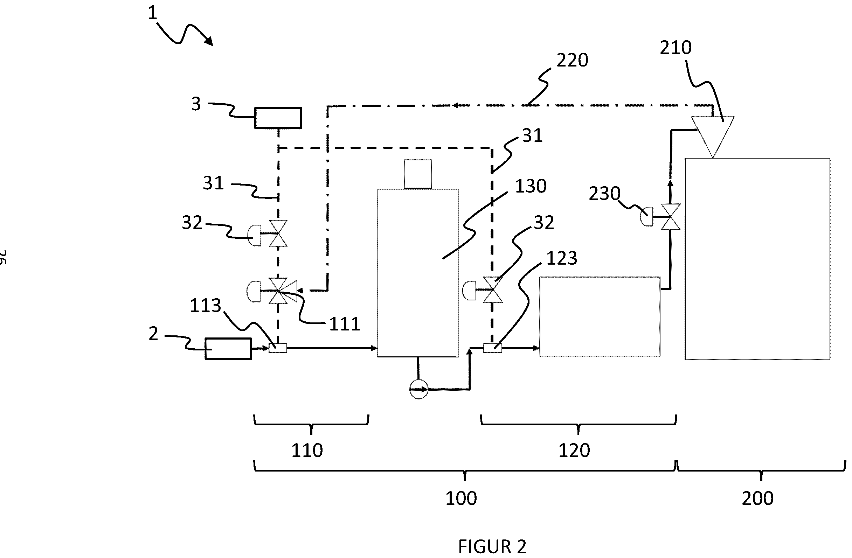

### Nachfolgend wird unter Bezugnahme auf Figur 2 eine zweite beispielhafte Ausführungsform der vorliegenden Erfindung beschrieben

Die zweite Ausführungsform unterscheidet sich von der ersten Ausführungsform durch die Ausführung und Anordnung der Rückführeinspeisungseinrichtung 111.

Gemäß der zweiten Ausführungsform weist die Rückführeinspeisungseinrichtung 111 eine Dampfstrahlpumpe auf, die mit Dampf, insbesondere Sattdampf oder überhitzten Dampf, aus der Dampfversorgungsquelle 3 gespeist wird.

Die Dampfstrahlpumpe der Rückführeinspeisungseinrichtung 111 ist in der Dampfversorgungsleitung 31 angeordnet, die die erste Dampfeinspeisungseinrichtung 113 der ersten Heizstrecke 110 mit Dampf versorgt.

Die Dampfstrahlpumpe bewirkt ein "Einsaugen" der rückgeführten gasförmigen Phase durch den von der Dampfversorgungsquelle 3 durch die Dampfstahlpumpe strömenden Dampf. Somit kann der der ersten Heizstrecke 110 zugeführte (Frisch-)Dampf die rückgeführte gasförmige Phase "mitreißen" und über die erste Dampfeinspeisungseinrichtung 113 in die erste Heizstrecke einspeisen.

Die Verwendung der Dampfstrahlpumpe zur Einspeisung der rückgeführten gasförmigen Phase gewährleistet eine zuverlässige Einspeisung der gasförmigen Phase in die Heizstrecke 100.

In der in Figur 2 gezeigten zweiten Ausführungsform ist die Dampfstrahlpumpe der Rückführeinspeisungseinrichtung 111 zwischen dem Regelventil 32 für die erste Dampfeinspeisungseinrichtung 113 und der ersten Dampfeinspeisungseinrichtung 113 angeordnet.

In einer abgewandelten Ausführungsform kann die Dampfstrahlpumpe der Rückführeinspeisungseinrichtung 111 auch zwischen der Dampfversorgungsquelle 3 und dem Regelventil 32, das heißt, stromaufwärts bezüglich des Regelventils 32, in der Dampfversorgungsleitung 31 für die erste Dampfeinspeisungseinrichtung 113 angeordnet werden.

In einer weiteren abgewandelten Ausführungsform kann das Regelventil 32 für die erste Dampfeinspeisungseinrichtung 113 entfallen und die Zufuhrmenge an Dampf kann über eine Regelung der Dampfstrahlpumpe der Rückführeinspeisungseinrichtung 111 geregelt werden.

In einer weiteren abgewandelten Ausführungsform kann die in der Dampfversorgungsleitung 31 für die erste Dampfeinspeisungseinrichtung 113 angeordnete Dampfstrahlpumpe der Rückführeinspeisungseinrichtung 111 durch ein Venturirohr oder ein einfaches T-Stück in der Dampfversorgungsleitung 31 zur Einspeisung der rückgeführten gasförmigen Phase ersetzt werden.

### Dritte Ausführungsform

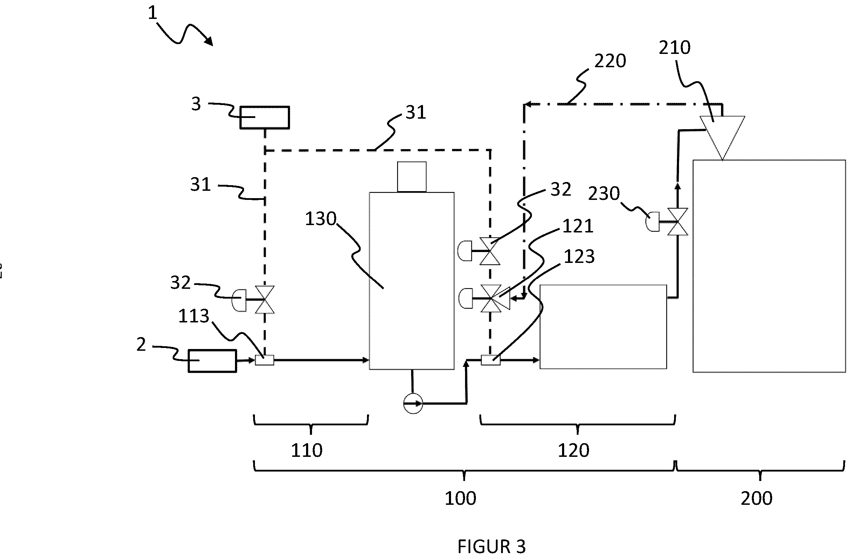

### Nachfolgend wird unter Bezugnahme auf Figur 3 eine dritte beispielhafte Ausführungsform der vorliegenden Erfindung beschrieben

Die dritte Ausführungsform unterscheidet sich von der zweiten Ausführungsform durch die Anordnung der Rückführeinspeisungseinrichtung 121.

Gemäß der in Figur 3 dargestellten dritten Ausführungsform ist die Rückführeinspeisungseinrichtung 121 in der Dampfversorgungsleitung 31 angeordnet, die die zweite Dampfeinspeisungseinrichtung 123 der zweiten Heizstrecke 120 mit Dampf versorgt.

Gemäß der dritten Ausführungsform weist die Rückführeinspeisungseinrichtung 121 eine Dampfstrahlpumpe auf, die mit Dampf, insbesondere Sattdampf oder überhitzten Dampf, aus der Dampfversorgungsquelle 3 gespeist wird.

In der in Figur 3 gezeigten dritten Ausführungsform ist die Dampfstrahlpumpe der Rückführeinspeisungseinrichtung 121 zwischen dem Regelventil 32 für die zweite Dampfeinspeisungseinrichtung 123 und der zweiten Dampfeinspeisungseinrichtung 123 angeordnet.

### In einer abgewandelten Ausführungsform kann die Dampfstrahlpumpe der Rückführeinspeisungseinrichtung 121 auch zwischen der

Dampfversorgungsquelle 3 und dem Regelventil 32, das heißt, stromaufwärts bezüglich des Regelventils 32, in der Dampfversorgungsleitung 31 für die zweite Dampfeinspeisungseinrichtung 123 angeordnet werden.

In einer weiteren abgewandelten Ausführungsform kann das Regelventil 32 für die zweite Dampfeinspeisungseinrichtung 123 entfallen. Die Zufuhrmenge an Dampf kann über eine Regelung der Dampfstrahlpumpe der Rückführeinspeisungseinrichtung 111 geregelt werden.

In einer weiteren abgewandelten Ausführungsform kann die in der Dampfversorgungsleitung 31 für die zweite Dampfeinspeisungseinrichtung 123 angeordnete Dampfstrahlpumpe der Rückführeinspeisungseinrichtung 121 durch ein Venturirohr oder ein einfaches T-Stück in der Dampfversorgungsleitung 31 zur Einspeisung der rückgeführten gasförmigen Phase in die zweite Heizstrecke 120 ersetzt werden.

### Vierte Ausführungsform

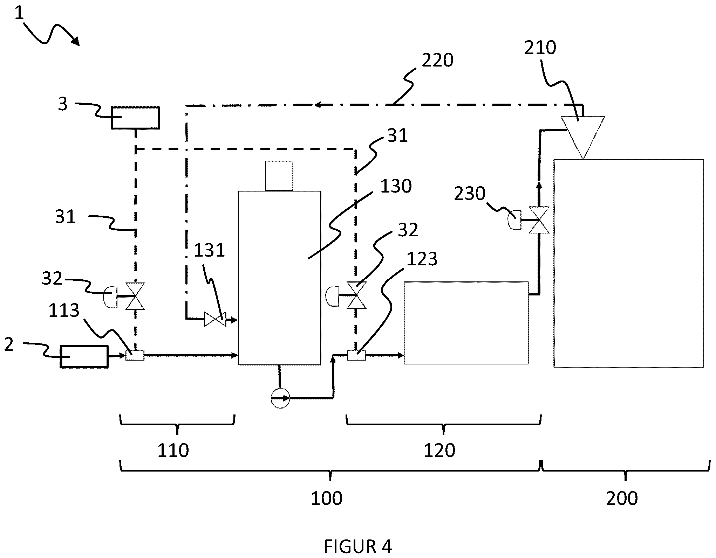

### Nachfolgend wird unter Bezugnahme auf Figur 4 eine vierte beispielhafte Ausführungsform der vorliegenden Erfindung beschrieben

Die vierte Ausführungsform unterscheidet sich von der ersten Ausführungsform durch die Ausführung und Anordnung der Rückführeinspeisungseinrichtung 131.

Gemäß der vierten Ausführungsform speist die Rückführeinspeisungseinrichtung 131 die in der Abscheidungseinrichtung 210 abgetrennte gasförmige Phase in den Abbaukonverter 130 ein.

Wie in Figur 4 gezeigt ist, kann in der Rückführungsleitung 220, die die abgetrennte gasförmige Phase von der Abscheidungseinrichtung 210 zu dem Abbaukonverter 130 führt, ein Ventil vorgesehen sein. Beispielsweise öffnet das Ventil, wenn die Druckverhältnisse eine Einspeisung der abgetrennten gasförmigen Phase in den Abbaukonverter 130 zulassen. Des Weiteren kann durch ein Schließen des Ventils ein Rückfluss in der Rückführungsleitung 220 von dem Abbaukonverter 130 in Richtung der Abscheidungseinrichtung 210 verhindert werden.

### Fünfte Ausführungsform

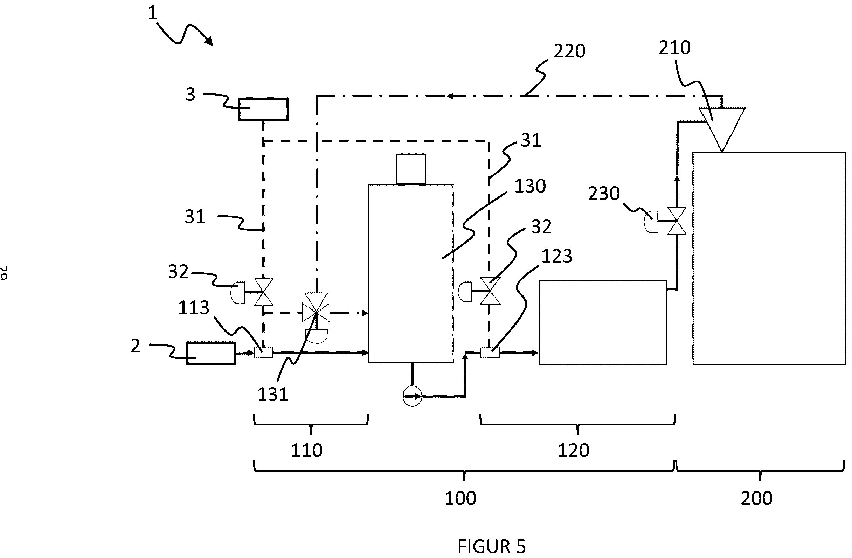

### Nachfolgend wird unter Bezugnahme auf Figur 5 eine fünfte beispielhafte Ausführungsform der vorliegenden Erfindung beschrieben

Die fünfte Ausführungsform unterscheidet sich von der vierten Ausführungsform durch die Ausführung der Rückführeinspeisungseinrichtung 131.

Gemäß der in Figur 5 dargestellten fünften Ausführungsform weist die Rückführeinspeisungseinrichtung 131 eine Dampfstrahlpumpe auf, die mit Dampf, insbesondere Sattdampf oder überhitzten Dampf, der der Dampfversorgungsleitung 31 für die erste Dampfeinspeisungseinrichtung 113 entnommen wird, gespeist wird.

Die Entnahme des Dampfs für die Dampfstrahlpumpe kann wie in Figur 5 gezeigt nach dem Regelventil 32 (stromabwärts bezüglich des Regelventils 32) für die erste Dampfeinspeisungseinrichtung 113 erfolgen. Alternativ kann die Entnahme des Dampfs für die Dampfstrahlpumpe auch vor dem Regelventil 32 (stromaufwärts bezüglich des Regelventils 32) für die erste Dampfeinspeisungseinrichtung 113 erfolgen.

Die Verwendung der Dampfstrahlpumpe zur Einspeisung der rückgeführten gasförmigen Phase gewährleistet eine zuverlässige Einspeisung der gasförmigen Phase in den Abbaukonverter 130.

### Sechste Ausführungsform

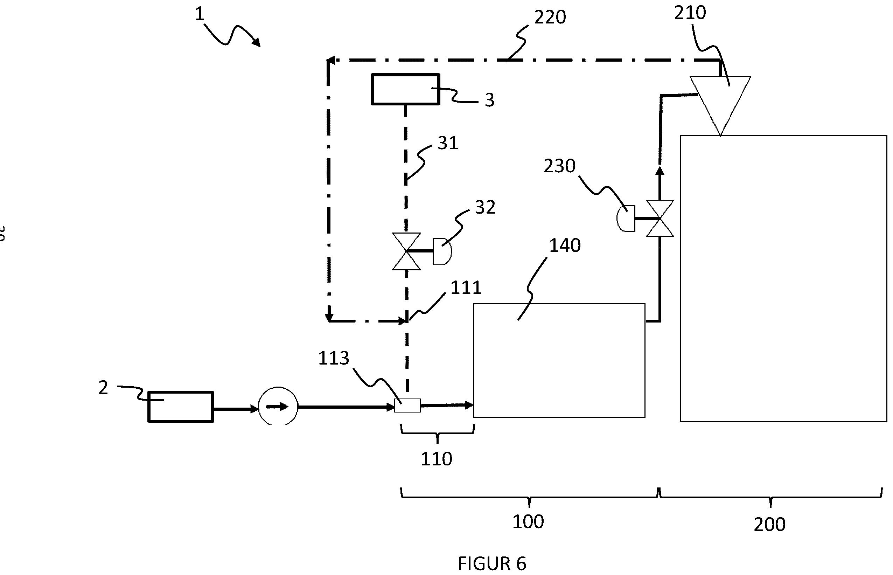

### Nachfolgend wird unter Bezugnahme auf Figur 6 eine sechste beispielhafte Ausführungsform der vorliegenden Erfindung beschrieben

Die sechste Ausführungsform unterscheidet sich von den vorhergehenden Ausführungsformen durch die Ausgestaltung der Heizstrecke 100.

Gemäß der in Figur 6 gezeigten sechsten Ausführungsform weist die Heizstrecke 100 eine erste Heizstrecke 110 und einen bezüglich der ersten Heizstrecke 110 stromabwärts angeordneten Jetkocher 140 auf.

Die erste Heizstrecke 110 umfasst die Dampfeinspeisungseinrichtung 113. In der ersten Heizstrecke 110 wird der Stärkezustand auf die Temperatur T2 erhitzt und auf den Druck P1 gebracht, der höher als der Referenzdruck P0 ist.

Das heißt, in der Vorrichtung gemäß der sechsten Ausführungsform wird der Stärkezustand bereits in der ersten Heizstrecke 110 auf die Temperatur T2 erhitzt, um den enzymatischen Stärkeabbau innerhalb des Stärkezustands zu stoppen.

Die Rückführeinspeisungseinrichtung 111 speist die in der Abscheidungseinrichtung 210 abgetrennte gasförmige Phase in die erste Heizstrecke 110 ein. Insbesondere speist die Rückführeinspeisungseinrichtung 111 die abgetrennte gasförmige Phase in die erste Heizstrecke 110 über die Dampfeinspeisungseinrichtung 113 ein.

Die Rückführeinspeisungseinrichtung 111 kann als Venturirohr oder einfache T-Stück in der Dampfversorgungsleitung 31 für die Dampfeinspeisungseinrichtung 113 ausgebildet sein.

Die Rückführeinspeisungseinrichtung 111 kann bezüglich des Regelventils 32 für die Dampfeinspeisungseinrichtung 113 stromaufwärts oder stromabwärts in der Dampfversorgungsleitung 31 angeordnet sein.

### Siebte Ausführungsform

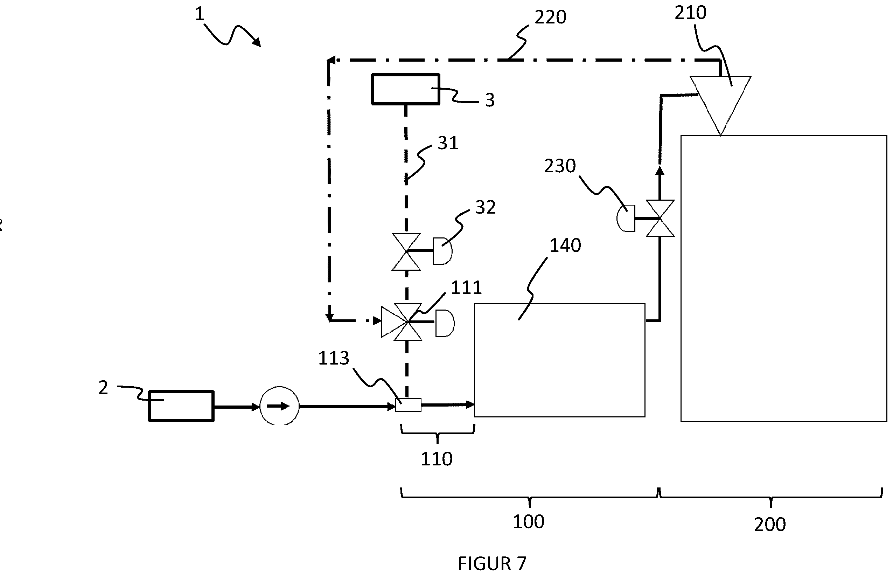

### Nachfolgend wird unter Bezugnahme auf Figur 7 eine siebte beispielhafte Ausführungsform der vorliegenden Erfindung beschrieben

Die siebte Ausführungsform unterscheidet sich von der sechsten Ausführungsform durch die Ausführung der Rückführeinspeisungseinrichtung 111.

Gemäß der in Figur 7 gezeigten Ausführungsform weist die Rückführeinspeisungseinrichtung 111 eine Dampfstrahlpumpe auf, die mit Dampf, insbesondere Sattdampf oder überhitzten Dampf, aus der Dampfversorgungsquelle 3 gespeist wird.

Die Dampfstrahlpumpe der Rückführeinspeisungseinrichtung 111 kann bezüglich des Regelventils 32 für die Dampfeinspeisungseinrichtung 113 stromaufwärts oder stromabwärts in der Dampfversorgungsleitung 31 angeordnet sein.

Alternative kann das Regelventil 32 für die Dampfeinspeisungseinrichtung 113 entfallen. In diesem Fall kann die Zufuhrmenge an Dampf über eine Regelung der Dampfstrahlpumpe der Rückführeinspeisungseinrichtung 111 geregelt werden.

Die Verwendung der Dampfstrahlpumpe zur Einspeisung der rückgeführten gasförmigen Phase gewährleistet eine zuverlässige Einspeisung der gasförmigen Phase über die Dampfeinspeisungseinrichtung 111 in die erste Heizstrecke 110.

### Weitere Abwandlungen der Ausführungsformen

Die oben beschriebenen Ausführungsformen können zweckmäßig abgewandelt oder kombiniert werden.

In der obigen Beschreibung wird ein Fliehkraftabscheider bzw. Zyklon beispielhaft als die Abscheidungseinrichtung 210 beschrieben. Die vorliegende Erfindung ist darauf jedoch nicht begrenzt.

Beispielsweise kann die Abscheidung der gasförmigen Phase von dem entspannten Stärkezustand auch als "passive Abscheidung" umgesetzt werden. Der Stärkezustand wird nach der Entspannung in einen Vorratsbehälter geleitet. Dort sammelt sich in einem oberen Abschnitt die bei der Entspannung entstehende gasförmige Phase. Diese kann von dem Vorratsbehälter durch die Rückführungsleitung 220 abgeleitet werden.

Die obige Beschreibung ist nicht erschöpfend und die vorliegende Erfindung ist nicht auf die oben genannte(n) Ausführungsform(en) beschränkt. Der Fachmann wird erkennen, dass innerhalb des Umfangs der vorliegenden Erfindung verschiedene Abwandlungen und Kombinationen der in der/den obigen Ausführungsform(en) enthaltenen Merkmale möglich sind. Daher sollte der Umfang der vorliegenden Erfindung durch die beigefügten Ansprüche bestimmt werden.

### Bezugszeichenliste

- 1: Vorrichtung
- 2: Zuführeinrichtung
- 3: Dampfversorgungsquelle
- 31: Dampfversorgungsleitung
- 32: Regelventil
- 100: Heizstrecke
- 110: erste Heizstrecke
- 111: Rückführeinspeisungseinrichtung
- 113: erste Dampfeinspeisungseinrichtung
- 120: zweite Heizstrecke
- 121: Rückführeinspeisungseinrichtung
- 123: zweite Dampfeinspeisungseinrichtung
- 130: Abbaukonverter
- 131: Rückführeinspeisungseinrichtung
- 140: Jetkocher
- 200: Entspannungsstrecke
- 210: Abscheidungseinrichtung
- 220: Rückführungsleitung
- 230: Expansionsventil

## Patentansprüche

1. Vorrichtung (1) zur kontinuierlichen thermischen Behandlung eines wässriges Stärkezustands, die Folgendes aufweist:
eine Heizstrecke (100), die eingerichtet ist, um den Stärkezustand zu erhitzen und unter Druck zu setzen,
eine Entspannungsstrecke (200), die eingerichtet ist, den erhitzten und unter Druck stehenden Stärkezustand auf einen Referenzdruck (P0) zu entspannen, wobei
die Entspannungsstrecke (200) eine Abscheidungseinrichtung (210) aufweist, die eingerichtet ist, eine bei der Entspannung des Stärkezustands entstehende gasförmige Phase, insbesondere Brüdendampf, von dem Stärkezustand abzutrennen, und
eine Rückführeinspeisungseinrichtung (111, 121, 131), die eingerichtet ist, um die in der Abscheidungseinrichtung (210) abgetrennte gasförmige Phase in die Heizstrecke (100) einzuspeisen.

2. Vorrichtung gemäß Anspruch 1, wobei die Vorrichtung des Weiteren die Heizstrecke (100) eine Dampfeinspeisungseinrichtung (113, 123) aufweist, die eingerichtet ist, den Dampf, insbesondere Sattdampf oder überhitzten Dampf, in die Heizstrecke (100) einzuspeisen, um den Stärkezustand zu erhitzen und unter Druck zu setzen.

3. Vorrichtung gemäß einem der vorhergehenden Ansprüche, wobei
die Heizstrecke (100) eine erste Heizstrecke (110), eine bezüglich der ersten Heizstrecke (100) stromabwärts angeordnete zweite Heizstrecke (120) und einen zwischen der ersten und zweiten Heizstrecke angeordneten Abbaukonverter (130) aufweist, und
die erste Heizstrecke (110) eine erste Dampfeinspeisungseinrichtung (113) umfasst und eingerichtet ist, den Stärkezustand auf eine erste Temperatur (T1) zu erhitzen,
die zweite Heizstrecke (120) eine zweite Dampfeinspeisungseinrichtung (123) umfasst und eingerichtet ist, den Stärkezustand auf eine zweite Temperatur (T2), die höher als die erste Temperatur (T1) ist, zu erhitzen und auf einen Druck (P1) zu bringen, der höher als der Referenzdruck (P0) ist, und
die Rückführeinspeisungseinrichtung (111, 121, 131) eingerichtet ist, die in der Abscheidungseinrichtung (210) abgetrennte gasförmige Phase in die erste Heizstrecke (110) und/oder die zweite Heizstrecke (120) und/oder den Abbaukonverter (130) einzuspeisen.

4. Vorrichtung gemäß einem der Ansprüche 1 bis 3, wobei
die Heizstrecke (100) eine erste Heizstrecke (110) und einen bezüglich der ersten Heizstrecke (110) stromabwärts angeordneten Jetkocher (140) aufweist,
die erste Heizstrecke (110) die Dampfeinspeisungseinrichtung (113) umfasst und eingerichtet ist, den Stärkezustand auf eine Temperatur (T2) zu erhitzen und auf einen Druck (P1) zu bringen, der höher als der Referenzdruck (P0) ist, und
die Rückführeinspeisungseinrichtung (111) eingerichtet ist, die in der Abscheidungseinrichtung (210) abgetrennte gasförmige Phase in die erste Heizstrecke (110) einzuspeisen.

5. Vorrichtung gemäß einem der vorhergehenden Ansprüche, wobei die Rückführeinspeisungseinrichtung (111, 121, 131) ein Venturirohr aufweist.

6. Vorrichtung gemäß einem der vorhergehenden Ansprüche, wobei die Rückführeinspeisungseinrichtung (111, 121, 131) eine Dampfstrahlpumpe aufweist, die mit Dampf, insbesondere Sattdampf oder überhitzten Dampf gespeist wird.

7. Vorrichtung gemäß einem der vorhergehenden Ansprüche, wobei die Rückführeinspeisungseinrichtung (111, 121) die in der Abscheidungseinrichtung (210) abgetrennte gasförmige Phase in die erste und/oder zweite Heizstrecke (110, 120) über die Dampfeinspeisungseinrichtung (113, 123) einspeist.

8. Vorrichtung gemäß einem der vorhergehenden Ansprüche, wobei die Abscheidungseinrichtung (210) einen Fliehkraftabscheider, insbesondere einen Zyklon, aufweist.

9. Verfahren zur kontinuierlichen thermischen Behandlung eines wässriges Stärkezustands (im Unteranspruch definieren) mit den folgenden Schritten:
Heizen und Druckbeaufschlagung des Stärkezustands in einer Heizstrecke (100),
Entspannung des Stärkezustands auf einen Referenzdruck (P0) in einer Entspannungsstrecke (200),
Abtrennung einer bei der Entspannung des Stärkezustands entstehenden gasförmigen Phase, insbesondere Brüdendampf, durch eine Abscheidungseinrichtung (210),
Rückführung der abgetrennten gasförmigen Phase zum Heizen des Stärkezustands durch eine Rückführeinspeisungseinrichtung (111, 121, 131).

10. Verfahren gemäß Anspruch 9 des Weiteren mit dem Schritt Einspeisen von Dampf, insbesondere Sattdampf oder überhitzten Dampf in die Heizstrecke (100) zum Heizen und zur Druckbeaufschlagung des Stärkezustands durch eine Dampfeinspeisungseinrichtung (113, 123).

11. Verfahren gemäß einem der vorhergehenden Ansprüche, wobei
das Heizen ein erstes Heizen des Stärkezustands auf eine erste Temperatur (T1) in der ersten Heizstrecke (110), und ein zweites Heizen des Stärkezustands auf eine zweite Temperatur (T2), die höher als die erste Temperatur (T1) ist, in der zweiten Heizstrecke (120) umfasst,
das Druckbeaufschlagen den Stärkezustand in der zweiten Heizstrecke auf einen Druck (P1) bringt, der höher als der Referenzdruck (P0) ist, und
die Rückführung der abgetrennten gasförmigen Phase durch die Rückführeinspeisungseinrichtung (111, 121, 131) in die erste Heizstrecke (110), und/oder die zweite Heizstrecke (120), und/oder den Abbaukonverter (130) erfolgt.

12. Verfahren gemäß einem der Ansprüche 9 oder 10, wobei
das Heizen den Stärkezustand in der ersten Heizstrecke (110) auf eine Temperatur (T2) bringt,
das Druckbeaufschlagen den Stärkezustand in der ersten Heizstrecke (110) auf einen Druck (P1) bringt, der höher als der Referenzdruck (P0) ist, und
die Rückführung der abgetrennten gasförmigen Phase durch die Rückführeinspeisungseinrichtung (111) in die erste Heizstrecke (110) erfolgt.

13. Verfahren gemäß einem der vorhergehenden Ansprüche, wobei die Rückführung durch die Rückführeinspeisungseinrichtung (111, 121, 131) erfolgt, die ein Venturirohr oder eine mit Dampf, insbesondere Sattdampf oder überhitzten Dampf, gespeiste Dampfstrahlpumpe aufweist.

14. Verfahren gemäß einem der vorhergehenden Ansprüche, wobei die Abtrennung durch die Abscheidungseinrichtung (210) erfolgt, die einen Fliehkraftabscheider, insbesondere einen Zyklon, aufweist.

15. Verfahren gemäß einem der vorhergehenden Ansprüche, wobei die kontinuierliche thermische Behandlung des wässrigen Stärkezustands in einer Vorrichtung gemäß einem der vorhergehenden Ansprüche erfolgt.
